# EUROPÄISCHE PATENTSCHRIFT

(11) **EP 0 939 888 B1**
(45) Veröffentlichungstag und Bekanntmachung des Hinweises auf die Patenterteilung: **08.08.2001**
(21) Anmeldenummer: 97951802.4
(22) Anmeldetag: 21.11.1997
(51) Int. Cl.: G01L 9/00, G01L 1/14, G01H 11/06, H04R 19/00

(54) **MIKROMECHANISCHER SENSOR**
MICROMECHANICAL SENSOR
CAPTEUR MICROMECANIQUE

(30) Priorität: 22.11.1996 DE 19648424
(43) Veröffentlichungstag der Anmeldung: 08.09.1999
(73) Patentinhaber: Infineon Technologies AG, 81669 München (DE)
(72) Erfinder: SCHEITER, Thomas, D-82041 Oberhaching (DE); NÄHER, Ulrich, D-80803 München (DE); HIEROLD, Christofer, D-81739 München (DE)
(74) Vertreter: Zedlitz, Peter, Dipl.-Inf.
(86) Internationale Anmeldenummer: DE9702740
(87) Internationale Veröffentlichungsnummer: WO9823934

(56) Entgegenhaltungen:
- EP-A- 0 727 650
- DE-C- 4 441 903
- US-A- 5 493 470

## Beschreibung

Für verschiedene Anwendungen sind stark miniaturisierte Sensoren erwünscht, mit deren Hilfe man Druckunterschiede oder Druckschwankungen messen kann. Ein Einsatz als Relativdrucksensor zur Messung eines Druckunterschiedes kommt z. B. dann in Frage, wenn der relative Druck eines in einem ersten Volumen eingeschlossenen Gases im Vergleich zu einem in einem zweiten Volumen eingeschlossenen Gas festgestellt werden soll. In einem solchen Fall ist es möglich, die beiden Drukke, die in den Gasvolumina vorherrschen, gesondert zu messen und diese absoluten Messungen miteinander zu vergleichen. Besonders einfach und zweckmäßig gestaltet sich die Messung aber dann, wenn derselbe Drucksensor mit beiden Gasvolumina in Verbindung steht und so ein vorhandener Druckunterschied sofort eine Auswirkung auf die von diesem Sensor gelieferten Meßwerte hat.

Ein solcher miniaturisierter Differenzdrucksensor ist in der EP-A-0727650 offenbart.

Eine weitere Anwendungsmöglichkeit für einen derartigen Sensor ist die Messung von kurzzeitigen Druckschwankungen, insbesondere für akustische Wellen, für die der Sensor dann einen Schallwandler, d. h. ein Mikrophon, für die Übertragung der Schallwellen in elektrische Signale darstellt. Mikrophone als mikromechanische Bauelemente in Silizium werden seit ca. 12 Jahren hergestellt. Eine Übersicht über die Entwicklung ist enthalten in dem Übersichtsartikel von P. R. Scheeper e.a.: "A Review of Silicon Microphones" in Sensors and Actuators A 44, 1-11 (1994). Wenn die für die Ansteuerschaltung des Mikrophones vorgesehenen elektronischen Bauelemente im Rahmen eines CMOS-Prozesses hergestellt werden, ist es vorteilhaft, wenn auch die mikromechanischen Komponenten des Mikrophones kompatibel zu diesem Prozeß hergestellt werden. Falls für das Mikrophon eine kapazitive Messung der elektrisch leitenden Mikrophonmembran gegenüber einer fest auf einem Chip angeordneten Gegenelektrode vorgesehen ist, werden bislang zwei miteinander verbundene Chips verwendet. Auf dem einen Chip befindet sich die mikromechanische Sensorstruktur mit der Membran, auf dem anderen Chip ist die Gegenelektrode angeordnet. Ein solches Mikrophon ist z. B. in der Veröffentlichung von T. Bourouina e.a.: "A new condenser microphone with a p⁺ silicon membrane" in Sensors and Actuators A,31, 149-152 (1992) beschrieben.

Ein Problem, das sich bei mikromechanischen Mikrophonen ergibt, besteht darin, daß kleine Membranen nur schwach ausgelenkt werden können und daher eine geringe Empfindlichkeit gegenüber Luftdruckschwankungen zeigen. Außerdem stellt die Luft zwischen den Meßelektroden eine starke Dämpfung der Membran dar, weil die Luft nicht schnell und stark genug komprimiert werden kann. Dadurch wird die Empfindlichkeit des Mikrophones reduziert. Es ist daher erforderlich, einen Druckausgleich der Luft zwischen den Meßelektroden zu ermöglichen.

Aufgabe der vorliegenden Erfindung ist es, einen mikromechanischen Sensor zur Bestimmung von Druckunterschieden oder Druckschwankungen anzugeben, der einfach herstellbar ist und der auf einfache Weise mit einer elektronischen Ansteuerschaltung verbunden werden kann.

Diese Aufgabe wird mit dem Sensor mit den Merkmalen des Anspruches 1 gelöst. Weitere Ausgestaltungen ergeben sich aus den abhängigen Ansprüchen.

Der erfindungsgemäße Sensor verwendet ein SOI-Substrat, bei dem eine dickere Bulk-Siliziumschicht von einer dünnen Body-Siliziumschicht durch eine Isolationsschicht, die z. B. Siliziumdioxyd sein kann, getrennt ist. Die Membran des Sensors ist über der Body-Siliziumschicht auf einer Abstandsschicht angeordnet, die einen Hohlraum aufweist, der eine Schwingung der Membran ermöglicht. Dieser Hohlraum ist durch Öffnungen in der Body-Siliziumschicht und eine große Aussparung in der Isolationsschicht und der Bulk-Siliziumschicht mit der Umgebung verbunden, so daß ein Druckausgleich stattfinden kann. Das unter der Membran eingeschlossene Luftvolumen kann daher bei einer Auslenkung der Membran durch Zu- und Abströmen von Luft durch die Öffnungen in der Body-Siliziumschicht vergrößert oder verkleinert werden, ohne daß eine wesentliche Druckänderung auftritt. Die Membran ist daher bei diesem Sensor nur gering bedämpft. Dadurch wird die Empfindlichkeit des Sensors erhöht, so daß er z. B. als Einsatz in einem Mikrophon geeignet ist. Ebenfalls kann diese Sensorstruktur als Relativdrucksensor verwendet werden, wenn ein Druckunterschied zwischen dem Medium über und dem Medium unter der Membran gemessen werden soll. Das wird dadurch ermöglicht, daß wegen der Öffnungen zum Hohlraum hin auch die Rückseite der Membran einem äußeren Luftdruck ausgesetzt werden kann.

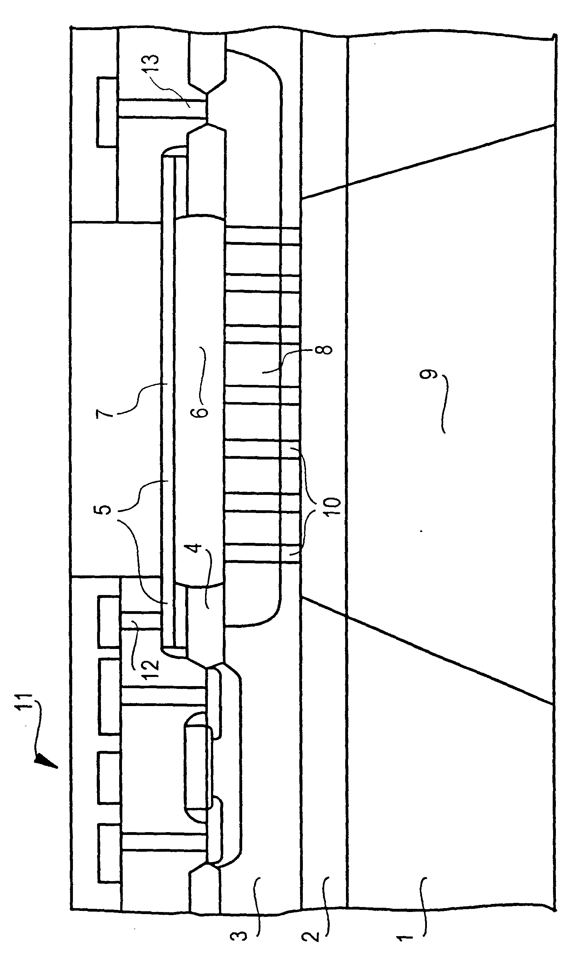

Es folgt eine genauere Beschreibung des erfindungsgemäßen Sensors anhand der beigefügten Figur. In dieser Figur ist im Querschnitt ein erfindungsgemäßer mikromechanischer Sensor dargestellt, der als Beispiel mit einem MOSFET integriert ist. Dieser MOSFET kann z. B. im Rahmen eines CMOS-Prozesses hergestellt werden.

Das verwendete SOI-Substrat umfaßt eine dicke Trägerschicht, die vorzugsweise Silizium ist und als Bulk-Siliziumschicht 1 bezeichnet wird. Darauf befindet sich eine Isolationsschicht 2, die vorzugsweise Siliziumdioxyd ist. Für die Herstellung der Bauelemente ist die darauf vorhandene dünne Siliziumschicht, die sogenannte Body-Siliziumschicht 3, vorgesehen. Auf dieser Body-Siliziumschicht 3 befindet sich eine Abstandsschicht 4, die die Membranschicht 5 trägt. In dieser Abstandsschicht befindet sich ein Hohlraum 6, durch den ein Schwingen der Membran ermöglicht ist. Diese Membran 7 ist durch einen Bereich der Membranschicht 5 gebildet, der nach außen hin frei ist und daher einem äußeren Luftdruck ausgesetzt werden kann. Die Abstandsschicht 4 ist vorzugsweise ein selektiv gegenüber dem Material der Membranschicht 5 ätzbares Material. Wenn die Membranschicht 5 (kristallines) Silizium oder Polysilizium ist, wird die Abstandsschicht vorzugsweise aus Siliziumoxid hergestellt. Die Abstandsschicht kann dann eine durch lokale thermische Oxidation (LOCOS) hergestellte Oxidschicht an der Oberseite der Body-Siliziumschicht 3 sein. Zwischen der Abstandsschicht 4 und der darauf aufgebrachten Membranschicht 5 kann eine dünne TEOS-Schicht vorgesehen sein.

In der Body-Siliziumschicht 3 ist ein dotierter Bereich 8 ausgebildet. Die Membranschicht 5 wird entweder elektrisch leitend dotiert oder mit einer dünnen, elektrisch leitenden weiteren Schicht, z. B. einer aufgedampften Metallschicht, versehen. Für eine kapazitive Messung sind elektrische Anschlüsse als Kontakte 12, 13 auf dem dotierten Bereich 8 und der Membranschicht 5 vorgesehen. De Kapazität des Sensors ändert sich, wenn die Membran 7 schwingt und damit ihren Abstand zu dem als Gegenelektrode fungierenden dotierten Bereich 8 ändert. Diese Kapazitätsänderung kann mittels einer angeschlossenen Auswerteschaltung in ein meßbares elektrisches Signal (Spannung, Strom) umgewandelt werden, z. B. in einen durch die Kapazitätsänderung hervorgerufenen Strom, wenn an die Elektroden eine elektrische Spannung angelegt wird.

In einer zur Schichtebene senkrechten Projektion der Membran ist auf deren Rückseite eine Aussparung 9 vorhanden. Diese Aussparung 9 ist durch eine Öffnung in der Bulk-Siliziumschicht 1 und der Isolationsschicht 2 gebildet. In der Body-Siliziumschicht 3 befinden sich Öffnungen 10, die den Hohlraum 6 unter der Membran mit dieser Aussparung 9 verbinden. Diese Öffnungen 10 sind so groß und zahlreich, daß ein für die vorgesehene Anwendung ausreichend guter Ausgleich des Druckes in dem Hohlraum 6 dadurch erfolgen kann, daß Luft oder ein anderes Gas durch diese Öffnungen 10 zu- oder abströmt. Um die mögliche Integration des mikromechanischen Sensors mit elektronischen Bauelementen auf demselben Substrat zu verdeutlichen, ist in der Figur als Beispiel ein MOSFET 11 eingezeichnet. Die für eine Ansteuerschaltung erforderlichen Komponenten können daher im Rahmen eines CMOS-Prozesses mit dem erfindungsgemäßen Sensor auf demselben Chip integriert hergestellt werden.

Bei der Herstellung dieses Sensors wird von einem SOI-Substrat ausgegangen. Die in der Body-Siliziumschicht herzustellenden Öffnungen 10 können auf einfache Weise dadurch hergestellt werden, daß in die Body-Siliziumschicht 3 bereits zu Anfang Löcher geätzt werden, die bis zur Isolationsschicht 2 hinab reichen und die mit Siliziumdioxid aufgefüllt werden. Es werden der dotierte Bereich 8, z. B. durch Eindiffusion von Dotierstoff, und eine für die Herstellung der Abstandsschicht 4 vorgesehene Hilfsschicht (Opferschicht, sacrificial layer) hergestellt. Diese Hilfsschicht wird am besten dadurch hergestellt, daß die Oberseite der Body-Siliziumschicht 3 mittels LOCOS zu Siliziumoxid oxidiert wird. Auf die Oberseite dieser Hilfsschicht wird ggf. eine dünne TEOS-Schicht abgeschieden und darauf eine Polysiliziumschicht aufgebracht. Diese Polysiliziumschicht, die für die Membran vorgesehen ist, wird vorzugsweise nicht dicker als 1 µm hergestellt. Wenn die Schicht nur etwa 500 nm dick ist, erhöht sich die Empfindlichkeit des Sensors entsprechend. Das Polysilizium der Membranschicht 5 kann z. B. in einem Prozeßschritt zusammen mit den Gate-Elektroden, die für MOSFET vorgesehen sind, abgeschieden werden. Die elektronischen Bauelemente in der Body-Siliziumschicht werden in herkömmlicher Weise hergestellt (herkömmlicher VLSI-Prozeß, CMOS-Prozeß). Die Oberseite der Bauelemente wird z. B. mit BPSG (Borphosphorsilikatglas) planarisiert. Es werden in dieser Planarisierungsschicht Kontaktlöcher hergestellt und für elektrischen Anschluß der einzelnen anzuschließenden Bereiche mit einem Kontaktmetall gefüllt. Es werden verschiedene durch Dielektrikumschichten voneinander getrennte Metallisierungsebenen hergestellt und strukturiert.

Anschließend wird das Substrat von der Rückseite her bearbeitet. Die Bulk-Siliziumschicht 1 wird z. B. mittels einer geeigneten Phototechnik im Bereich des Sensors ausgeätzt. Das Silizium läßt sich z. B. mittels KOH selektiv gegenüber SiO₂ entfernen. Die Isolationsschicht 2, die vorzugsweise SiO₂ ist, wirkt dann als Ätzstopp für diesen Ätzprozeß. Wenn das für die Aussparung 9 zu entfernende Silizium aus der Bulk-Siliziumschicht 1 herausgeätzt ist, wird das SiO₂ und die in den herzustellenden Öffnungen 10 eingebrachten SiO₂-Anteile entfernt. Das wird selektiv gegen Silizium z. B. mittels Flußsäure (HF) durchgeführt. Der Hohlraum 6 kann zusammen mit diesem Ätzschritt hergestellt werden. Das im Bereich des Hohlraumes 6 zunächst vorhandene Siliziumdioxid der Hilfsschicht wird dann durch die Öffnungen 10, die hier als Ätzöffnungen fungieren, entfernt. Alternativ dazu ist es möglich, vor dem Planarisieren der Oberseite der Body-Siliziumschicht 3 mittels BPSG Ätzöffnungen in der Membranschicht 5, vorzugsweise im Bereich des herzustellenden Hohlraumes 6, zu ätzen und unter Verwendung dieser Ätzöffnungen den Hohlraum 6 herzustellen. Die aufzubringende Planarisierungsschicht dient dann gleichzeitig als Verschlußschicht, mit der die Ätzöffnungen in der Membranschicht verschlossen werden. Es kann auch eine gesonderte Verschlußschicht, die z. B. ein Metall sein kann, auf die Membranschicht aufgebracht werden. Falls eine solche Metallschicht als Verschlußschicht vorgesehen ist, kann das Polysilizium der Membran undotiert bleiben, weil dann die metallische Verschlußschicht als Elektrode für die kapazitive Messung eingesetzt werden kann. Aufgrund der extrem dünnen Schichten, die in einem derartigen VLSI-Prozeß hergestellt werden können, besitzt dieser Sensor eine hohe Empfindlichkeit, was insbesondere bei einem Einsatz als Mikrophon von Vorteil ist.

Der beschriebene Sensor kann auch als Relativdrucksensor verwendet werden. Der Chip mit dem Sensor wird dann zwischen zwei separaten Gasbehältern angebracht. Die in den beiden Behältern befindlichen Gase stehen dann jeweils nur mit der Oberseite oder Unterseite der Membran in Verbindung. Es kommt auch ein Einsatz als Relativdrucksensor für die Detektion kurzzeitiger Druckänderungen in einem Gas vor der Vorderseite der Membran gegenüber dem Gas hinter der Rückseite der Membran in Frage. Damit ist der Sensor z. B. zur Detektion von Stoßwellen geeignet. Bei einem Einsatz des Sensors als Relativdrucksensor in Flüssigkeiten ist die Abmessung der Öffnungen 10 entsprechend anzupassen. Um die Auslenkung der Membran zum Substrat hin (Überdruck auf der Vorderseite der Membran) oder vom Substrat weg (Überdruck auf der Rückseite der Membran) erfassen zu können, ist bei einem Relativdrucksensor vorzugsweise ein gleichartig strukturierter zweiter Sensor auf demselben Chip integriert. Bei diesem als Bezugssensor fungierenden zweiten Sensor ist die Struktur der mikromechanischen Komponente gleich der Struktur des für die Messung vorgesehenen Sensors. Eine Auslenkung der Membran dieses Bezugssensors ist aber z. B. dadurch vermieden, daß ein restlicher Anteil der Hilfsschicht in dem Hohlraum 6 belassen wurde. Im Extremfall kann der Hohlraum entfallen und vollständig durch die Abstandsschicht 4 ersetzt werden. Wegen einer dadurch bedingten Änderung der Dielektrizitätskonstante des von dem dotierten Bereich 8 und der Membran 7 gebildeten Kondensators empfiehlt es sich aber, möglichst viel Material der Abstandsschicht 4 zu entfernen und nur einen oder einige wenige Reste zum Abstützen der Membran 7 in dem Hohlraum 6 zu lassen. Die Membran ist dadurch arretiert in der Normalposition, d. h. der Position, die eine frei bewegliche Membran einnimmt bei gleich starkem Druck auf Vorderseite und Rückseite des Sensors. Eine Membranauslenkung bei dem für die Messung vorgesehenen Sensor kann durch Vergleich mit der Kapazität dieses Bezugssensors festgestellt werden. Auf diese Weise kann bei Verwendung einer relativ einfachen Ansteuerschaltung sehr genau ein einseitiger Überdruck detektiert werden.

## Patentansprüche

1. Mikromechanischer Sensor auf SOI-Substrat mit Body-Siliziumschicht (3), Isolationsschicht (2) und Bulk-Siliziumschicht (1),
- bei dem auf der Body-Siliziumschicht eine Abstandsschicht (4) und darauf eine Membranschicht (5) vorhanden sind,
- bei dem zur Ausbildung einer Membran ein Hohlraum (6) in dieser Abstandsschicht vorhanden ist, so daß in einem die Membran (7) bildenden Bereich der Membranschicht die Abstandsschicht entfernt ist,
- bei dem die Membranschicht zumindest in einem Anteil des die Membran bildenden Bereiches elektrisch leitfähig ausgebildet oder mit einer elektrisch leitenden Schicht versehen ist und ein zugehöriger Kontakt (12) für elektrischen Anschluß vorhanden ist,
- bei dem in der bezüglich der Schichtebenen senkrechten Projektion der Membran in der Body-Siliziumschicht ein dotierter Bereich (8) ausgebildet ist und ein zugehöriger Kontakt (13) für elektrischen Anschluß vorhanden ist,
- bei dem in der bezüglich der Schichtebenen senkrechten Projektion der Membran das Material der Isolationsschicht und das Material der Bulk-Siliziumschicht entfernt sind, so daß dort eine Aussparung (9) vorhanden ist, und
- bei dem in der bezüglich der Schichtebenen senkrechten Projektion der Membran die Body-Siliziumschicht Öffnungen (10) aufweist, die den Hohlraum mit der Aussparung verbinden.

2. Sensor nach Anspruch 1, bei dem in der Body-Siliziumschicht Bauelemente (11) einer elektronischen Schaltung zum Betrieb des Sensors integriert sind.

3. Sensor nach Anspruch 1 oder 2 als Relativdrucksensor, bei dem auf dem Substrat als Bezugssensor ein weiterer Sensor vorhanden ist,
wobei bei diesem weiteren Sensor zumindest ein Teil der Abstandsschicht auch in dem die Membran bildenden Bereich der Membranschicht vorhanden ist und eine Auslenkung der Membran verhindert und ansonsten die Strukturen der Sensoren übereinstimmen.

## Claims

1. Micromechanical sensor on an SOI substrate having a body silicon layer (3), insulation layer (2) and bulk silicon layer (1),
- in which a spacer layer (4) is present on the body silicon layer and a diaphragm layer (5) is present on the said spacer layer,
- in which a cavity (6) is present in the said spacer layer in order to form a diaphragm, so that the spacer layer is removed in a region of the diaphragm layer which forms the diaphragm (7),
- in which, at least in a portion of the region forming the diaphragm, the diaphragm layer is designed to be electrically conductive or is provided with an electrically conductive layer and an associated contact (12) for electrical connection is present,
- in which, in the projection of the diaphragm which is perpendicular with respect to the layer planes, a doped region (8) is formed in the body silicon layer and an associated contact (13) for electrical connection is present,
- in which, in the projection of the diaphragm which is perpendicular with respect to the layer planes, the material of the insulation layer and the material of the bulk silicon layer are removed, so that a cutout (9) is present there, and
- in which, in the projection of the diaphragm which is perpendicular with respect to the layer planes, the body silicon layer has openings (10) which connect the cavity to the cutout.

2. Sensor according to Claim 1, in which components (11) of an electronic circuit for operating the sensor are integrated in the body silicon layer.

3. Sensor according to Claim 1 or 2 as a relative pressure sensor,
in which a further sensor is present as a reference sensor on the substrate,
in the case of this further sensor at least a portion of the spacer layer is also present in the region of the diaphragm layer which forms the diaphragm, and prevents a deflection of the diaphragm and otherwise the structures of the sensors correspond.

## Revendications

1. Capteur micromécanique sur un substrat en SOI ayant une couche (3) de silicium body, une couche (2) d'isolement et une couche (1) de silicium bulk ;
- dans lequel il est prévu sur la couche de silicium body une couche (4) intercalaire et dessus une couche (5) de membrane,
- dans lequel il est prévu pour la constitution d'une membrane une cavité (6) dans cette couche intercalaire de manière à éliminer la couche intercalaire dans une partie de la couche de membrane formant la membrane (7),
- dans lequel la couche de membrane est constituée électriquement conductrice au moins dans une partie de la partie formant la membrane ou est munie d'une couche conductrice de l'électricité et il est prévu un contact (12) associé pour un raccordement électrique,
- dans lequel dans la projection, perpendiculaire par rapport au plan de la couche, de la membrane il est constitué dans la couche de silicium body une partie (8) dopée et il est prévu un contact (13) associé pour un raccordement électrique,
- dans lequel dans la projection, perpendiculaire par rapport au plan de la couche, de la membrane, la matière de la couche d'isolement et la matière de la couche de silicium bulk sont éliminées de manière à y ménager un évidement (9), et
- dans lequel dans la projection, perpendiculaire par rapport au plan de la couche, de la membrane, la couche de silicium body comporte des ouvertures (10) qui mettent la cavité en communication avec l'évidement.

2. Capteur suivant la revendication 1,
dans lequel il est intégré dans la couche de silicium body des composants (11) d'un circuit électronique pour faire fonctionner le capteur.

3. Capteur suivant la revendication 1 ou 2, servant de capteur de pression relative dans lequel il est prévu sur le substrat comme capteur de référence un autre capteur,
au moins une partie de la couche intercalaire est, dans cet autre capteur, prévue également dans la partie de la couche de membrane formant la membrane et empêche une excursion de la membrane, mais coïncide sinon avec les structures des capteurs.
